# EUROPEAN PATENT APPLICATION

(11) **EP 4 257 251 A1**
(43) Date of publication of application: **11.10.2023**
(21) Application number: 21900360.5
(22) Date of filing: 05.11.2021
(51) Int. Cl.: B08B 1/00, B23Q 11/08

(54) **WIPER**

(30) Priority: 04.12.2020 JP 2020202296
(71) Applicant: Nitta Corporation, Osaka-shi, Osaka 556-0022 (JP)
(72) Inventor: SHIMADA, Tomohisa, Yamatokohriyama-shi, Nara 639-1085 (JP); MIYAGI, Yoshihiro, Yamatokohriyama-shi, Nara 639-1085 (JP)
(74) Representative: Viering, Jentschura & Partner mbB Patent- und Rechtsanwälte
(86) International application number: PCT/JP2021/040832
(87) International publication number: WO 2022/118605

(57) **Abstract**

A wiper 1 of the present invention incudes a belt-like attachment part 2 made of a hard plate such as a metal plate or a plastic plate, and a lip part 3 made of an elastic body and attached to a side surface 21 of the attachment part 2. The side surface 21 of the attachment part 2 and the lip part 3 are vulcanized and bonded in a mold.

## Description

### TECHNICAL FIELD

The present invention relates to a wiper for removing foreign matters such as metal waste adhering to a surface of a sliding member (a surface to be cleaned) of a machine tool or the like.

### BACKGROUND

For the purpose of preventing foreign matters, such as chips and water-soluble cutting fluid (coolant), from clogging into a sliding surface of industrial machinery, such as a lathe and a milling machine, a wiper has conventionally been used (refer to such as Patent Document 1). A wiper of this type is shown in Figs. 4A and 4B. As shown in the figures, a wiper 100 includes an attachment part 101 to be attached to a machine tool, and a lip part 102 made of an elastic material (rubber material) whose tip contacts a sliding surface of the machine tool to remove the foreign matters. The attachment part 101 includes a reinforcing plate 101a made of a belt-like steel plate or the like and a back part 101b made of an elastic material (rubber material) disposed on the side of the back surface of the reinforcing plate 101a. The lip part 102 and the back part 101b are formed by filling an elastic material in a mold including the reinforcing plate 101a and integrally molding them.

The wiper 100 formed in this manner is fixed to an attachment surface of the machine tool by inserting a bolt through a bolt insertion hole (not shown) for attaching formed in the longitudinal direction of the attachment part 101.

In the wiper 100, the bonding between the reinforcing plate 101a and the elastic material is important for a running performance and durability of the wiper 100. If the bonding strength is low, there is a risk that the lip part 102 is easily broken from the reinforcing plate 101a.

In addition, since the back part 101b made of the elastic material (rubber material) is bonded to a back surface of the reinforcing plate 101a in consideration of the bonding strength, distortion or deflection has easily occurred in the back part 101b when the bolt is tightened.

On the contrary, Patent Document 2 describes a wiper in which an attachment part and a lip part are made of synthetic resin, a hardness of the attachment part, which is required to be rigid, is increased, a hardness of the lip part, which is required to follow a sliding surface, is decreased, and both are integrated by fusion bonding. In Patent Document 2, any elastic material is not formed on the side of a back surface of the attachment part.

An extrusion molding method is adopted to integrate the attachment part and the lip part made of synthetic resin by fusion bonding. However, if finishing accuracy of the tip of the lip part is low, there is a concern about a sealing performance between the sliding surface and the tip of the lip part that slides on the sliding surface, and there is a risk that the function as a wiper for scraping off cutting oil, coolant or the like may not be fully achieved.

### PRIOR ART DOCUMENT

### PATENT DOCUMENT

Patent Document 1: Japanese Unexamined Patent Publication No. 2020-32336.
Patent Document 2: Japanese Unexamined Patent Publication No. 2005-66376.

### SUMMARY

### PROBLEMS TO BE SOLVED BY THE INVENTION

One of the objects of the present invention is to provide a wiper that has high durability by improving a bonding strength between an attachment part and a lip part, has no distortion or deflection of the attachment part due to bolt tightening while attaching to a machine tool, and has a high sealing property of the tip of the lip part against a sliding surface.

### MEANS OF SOLVING THE PROBLEMS

A wiper of the present invention includes a belt-like attachment part made of a hard plate and having a longitudinal direction and a short direction, and a lip part made of an elastic body and attached to a side surface of the attachment part in the short direction. The side surface of the attachment part and the lip part are vulcanized and bonded in a mold.

### EFFECTS OF THE INVENTION

According to the present invention, the wiper obtained by vulcanizing and bonding the side surface of the belt-like attachment part and the lip part in the mold improves a bonding strength between the attachment part and the lip part and has high durability. Additionally, since elastic material is not included in a back part of the attachment part, distortion or deflection of the attachment part due to bolt tightening during attaching to the machine tool does not occur. Furthermore, since the side surface of the attaching part and the lip part are vulcanized and bonded in the mold, the finishing accuracy of the tip of the lip part is increased, and a sealing performance against a sliding surface is improved.

### BRIEF DESCRIPTION OF THE DRAWINGS

Fig. 1A is a front view of a wiper according to one embodiment of the present invention.
Fig. 1B is a cross-sectional view of the X-X line of FIG. 1A.
Fig. 2A to Fig. 2F are cross-sectional views showing examples of the shape of the attachment part in an embodiment of the present invention, respectively.
Fig. 3A to Fig. 3C are cross-sectional views showing other examples of the shape of the attachment part in the embodiment of the present invention, respectively.

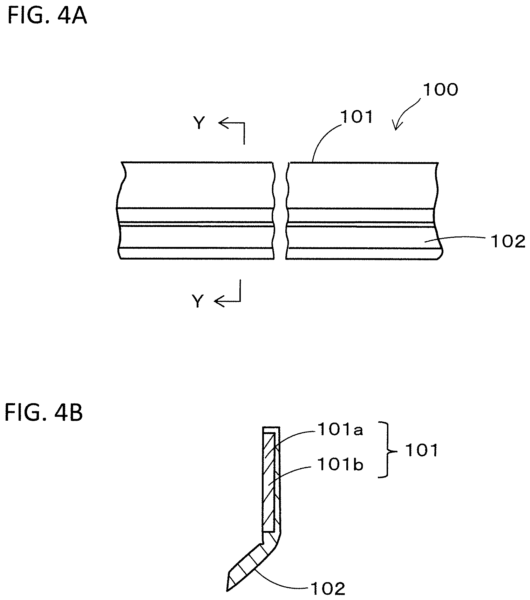

Fig. 4A is a front view of a conventional wiper.
Fig. 4B is a cross-sectional view of the Y-Y line of Fig. 4A.

### EMBODIMENTS FOR CARRYING OUT THE INVENTION

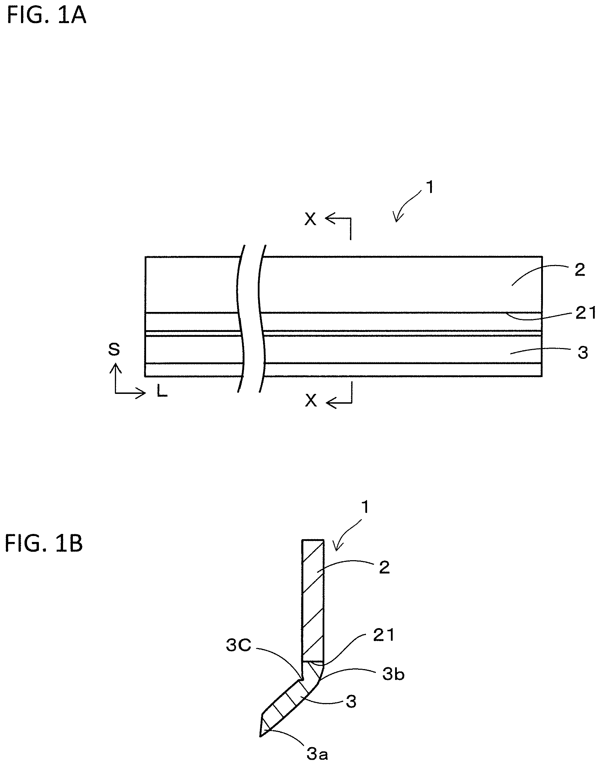

A wiper according to one embodiment of the present invention will be described below with reference to the drawings. Fig. 1A and Fig. 1B show a front view of a wiper 1 according one embodiment of the present invention and its cross-sectional view of the X-X line. The wiper 1 incudes a belt-like attachment part 2 made of a metal plate or a plastic plate, and a lip part 3 made of a rubber elastic body and attached to a short direction of the attachment part.

The attachment part 2, which serves as a reinforcing plate, includes a belt-like hard plate such as a metal plate and a resin plate. Examples of the metal plate include a steel plate (such as stainless steel), aluminum plate, brass plate and tungsten plate.

The resin plate is preferably the one that can withstand temperatures of 150°C or more when the wiper is molded, and its examples include fluororesin, super engineering plastics such as polyetheretherketone, and composite polyethylene terephthalate filled with such as short glass fibers and inorganic fillers.

It may also be a composite plate combining a metal plate and a resin plate.

A thickness of the attachment part 2 can be set arbitrarily, but in order to increase the bonding strength with the lip part 3, it is appropriate to have a thickness of 1.0 mm or more, preferably 1.2 mm or more, more preferably 1.6 mm or more. The larger the thickness of the attachment part 2 is, the greater the bonding strength with the lip part 3 is, but it may preferably have a thickness of 7.0 mm or less. The length of the attachment part 2 in the short direction (the S direction shown in Fig. 1A) is usually 5 mm or more, preferably approximately 5 to 50 mm. In Fig. 1A, a part of the longitudinal direction (the L direction shown in the same figure) of the attachment part 2 is cut out and shown.

A side surface 21 in the short direction (the S direction shown in Fig. 1A) of the attachment part 2 to which the lip part 3 is attached is a flat surface along the longitudinal direction (the L direction shown in the same figure) (refer to Fig. 1B). Even with such a flat surface, the side surface 21 of the attachment part 2 and the lip part 3 are vulcanized and bonded in a mold, so that the lip part 3 can be joined to the side surface 21 of the attachment part 2 with high joining strength.

As shown in Fig. 1B, the lip part 3 has a notch part 3c so that when the wiper 1 is pressed against a sliding surface (that is, the surface to be cleaned), a bending part 3b is deformed so that a sliding part 3a at the tip adheres to the surface to be cleaned.

A thickness of the lip part 3 is preferably approximately the same as the thickness of the attachment part 2, but may be smaller than it. Furthermore, the thickness of the lip part 3 may be larger than the thickness of the attachment part 2 as long as the performance of the wiper 1 is not affected.

The thickness of the lip part 3 may be continuously or stepwise decreased or increased from the side surface 21 of the attachment part 2 to the sliding part 3a at the tip.

The lip part 3 includes an elastic body formed from elastic materials. Examples of the elastic materials include elastomer such as natural rubber, nitrile rubber, chloroprene rubber, butyl rubber, Hypalon (chlorosulfonated polyethylene), polybutadiene rubber, ethylene-propylene rubber (EPM), ethylene-propylene-diene terpolymer (EPDM), hydrogenated acrylonitrile butadiene rubber (H-NBR), silicone rubber, fluoro rubber, acrylic rubber, styrene butadiene rubber, chlorinated polyethylene rubber, mirabile urethane, thermosetting polyurethane, thermoplastic polyurethane or thermoplastic polyester, and one or more of them may be used.

The side surface 21 of the attachment part 2 and the lip part 3, which is made of an elastic body, are vulcanized and bonded in the mold. As is well known, different types of elastic materials use different forms of vulcanization, that is, crosslinking methods are also different. Examples of crosslinking methods include sulfur crosslinking using such as sulfur or organic sulfur compound, peroxide crosslinking using organic peroxides such as dicumyl peroxide, resin crosslinking using alkylphenol resin oligomer, amine crosslinking using diamines (such as hexamethylenediamine carbamate), polyol crosslinking using bisphenols, and metal crosslinking using such as zinc oxide ZnO. Specifically, the type of vulcanizing agent to be used may be appropriately selected according to the type of the elastic material such as whether the elastic material has double bonds, the type of crosslinking points and the like.

In addition to the vulcanizing agent, the elastic material may contain a vulcanization accelerator, a vulcanization accelerator aid, and a reinforcing agent. Examples of vulcanization accelerators include thiazoles such as 2-mercaptobenzothiazole (MBT) and dibenzothiazyl disulfide (MBTS); sulfenamides such as N-cyclohexyl-2-benzothiazolesulfenamide (CBS) and N-t-butyl-2-benzothiazolesulfenamide (BBS); thiurams such as tetramethylthiuram disulfide (TMTD) and tetramethylthiuram monosulfide (TMTM); dithiocarbamates such as zinc dimethyldithiocarbamate (ZnPDC); guanidines such as diphenylguanidine (DPG).

Examples of vulcanization acceleration aids include fatty acids such as stearic acid and metal oxides such as zinc oxide. Examples of reinforcing agents include carbon black and white carbon.

Furthermore, for example, anti-aging agents, fillers, plasticizers and adhesives may be added. In addition to these, solid lubricants such as graphite, silicon oil, fluorine powder, and molybdenum disulfide may be contained to reduce sliding resistance.

In order to improve the sliding property of the wiper 1, a metal plate, a resin plate, a fiber cloth or the like that contacts the surface to be slid may be affixed to the sliding part 3a at the tip of the lip part 3, or fiber materials such as nylon or spherical resin material may be contained in the sliding part 3a partially or entirely.

In the present embodiment, in order to join the lip part 3 to the side surface 21 of the attachment part 2, the side surface 21 of the attachment part 2 and the lip part 3 are vulcanized and bonded in the mold. The mold has an upper mold and a lower mold, and the attachment part 2 is placed in the lower mold in advance. Then, it is filled with an elastic material, and the lip part 3 is vulcanized and formed by heating and pressurizing with the upper mold and the lower mold, and at the same time, the wiper 1 in which the lip part 3 is vulcanized and bonded to the side surface 21 of the attachment part 2 is obtained.

In this way, since the lip part 3 is vulcanized and formed in the mold, the sliding part 3a of the lip part 3 is finished with good accuracy, which improves the sealing performance with the sliding surface and makes it excellent in scraping off oil, coolant, and the like.

It is preferable to perform blasting and/or degreasing treatment in advance on the side surface of the belt-like hard plate that forms the attachment part 2 to further increase the joining strength.

It is advisable to apply adhesive to the side surfaces of the belt-like hard plate and place it in a predetermined position in the mold.

Examples of the adhesive include a two-liquid type adhesive containing a primer liquid and a top coating liquid. The primer liquid and the top coating liquid contain, for example, halogenated polymers such as chlorinated polyethylene, chloroprene rubber, chlorinated butyl rubber, chlorosulfonated polyethylene, and brominated chlorinated polybutadiene; phenolic resin; and epoxy resin as a main component.

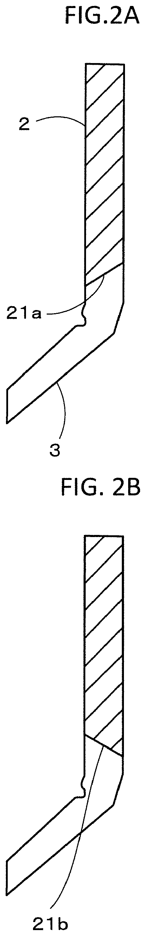

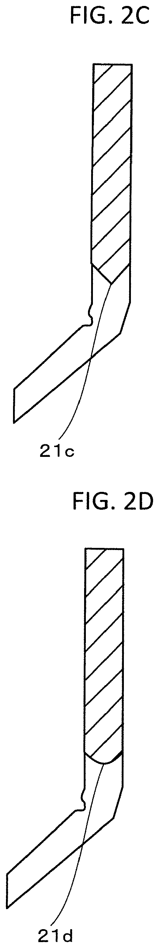

Additionally, to increase the bonding area, the flat side surface 21 of the attachment part 2 may be replaced by side surfaces 21a to 21f having an inclined surface, a curved surface, or a step in the thickness direction as shown in Figs. 2A to 2F. That is, Figs. 2A and 2B show the side surfaces 21a and 21b formed of the inclined surfaces. Fig. 2C shows a V-shaped side surface 21c combining two inclined surfaces. The side surface 21c may have an inverted V-shape.

Fig. 2D shows the side surface 21d configured with a curved surface (arc shape). The curved surface may be a convex curved surface as shown in the same figure or may be a concave curved surface.

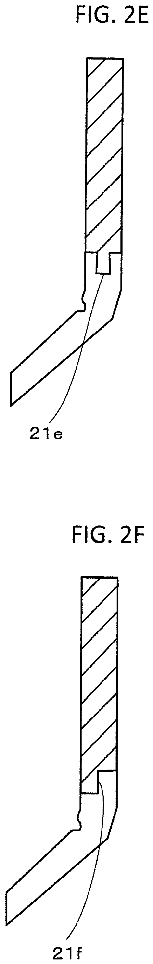

Figs. 2E and 2F show the side surfaces 21e and 21f having steps. The steps may be one or two or more (such as convex and stepwise).

Others are the same as the wiper 1 shown in Fig. 1, so detailed description will be omitted.

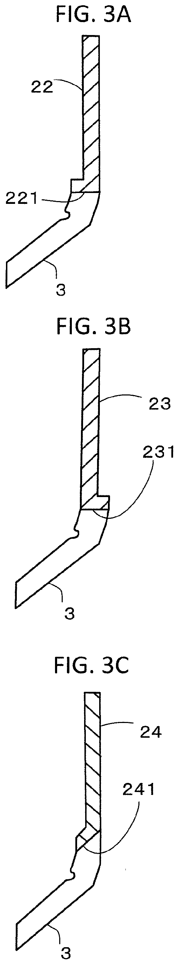

To improve the bending strength of the attachment part 2, which is made of a belt-like metal plate or resin plate, as shown in Figs. 3A to 3C, side surfaces 221, 231, 241 joined to the lip part 3 may be formed by bending the side parts of the attachment parts 22, 23, and 24 in the thickness direction. In other words, Figs. 3A and 3B show the attachment parts 22 and 23 bent at right angles, and the side surfaces 221 and 231 are formed at the bent parts. Fig. 3C shows the attachment part 24 bent obliquely, and the side surface 241 is formed at the bent part. The inclination of the side part of the attachment part 24 may be downward or upward.

In this embodiment, it is possible to increase the area of the side surfaces 221, 231, and 241 regardless of the thickness of the attachment parts 22, 23, and 24, so high joining strength can be obtained. Others are the same as the wiper 1 shown in Fig. 1, so detailed description will be omitted.

Since the side surface of the attachment part and the lip part are vulcanized and bonded in the mold, the joining strength between them is improved and the durability is excellent. Therefore, since it is not necessary to provide an elastic material on the back part of the attachment part, distortion or deflection of the attachment part due to bolt tightening during attaching to the machine tool does not occur.

Furthermore, since they are vulcanized and bonded in the mold, the finishing accuracy of the tip of the lip part is improved, and the sealing performance against the sliding surface is improved.

Various embodiments of the present invention have been described above, but these descriptions are presented for illustration only, and the present invention is not limited to the forms presented in the embodiments, and various modifications and variations can be made within the scope of the present invention.

### DESCRIPTION OF THE REFERENCE NUMERAL

1, 100 Wiper
2, 22, 23, 24, 101 Attachment part
   21, 21a to 21f, 221, 231, 241 side surface
   101a reinforcing plate
   101b back part
3, 102 Lip part
   3a sliding part
   3b bending part
   3c notch part

## Claims

1. A wiper comprising
a belt-like attachment part made of a hard plate and having a longitudinal direction and a short direction, and
a lip part made of an elastic body and attached to a side surface of the attachment part in the short direction, and
wherein the side surface of the attachment part and the lip part are vulcanized and bonded in a mold.

2. The wiper according to Claim 1, wherein the hard plate is a metal plate or a plastic plate.

3. The wiper according to Claim 1 or 2, wherein the side surface of the attachment part has a flat surface.

4. The wiper according to Claim 1 or 2, wherein the side surface of the attachment part has an inclined surface, a curved surface, or a step in the thickness direction of the attachment part.

5. The wiper according to any one of Claims 1 to 4, wherein the side surfaces are formed by bending side parts in the short direction at right angles or obliquely in the thickness direction of the attachment part.

6. The wiper according to any one of Claims 1 to 5, wherein a metal plate, a resin plate or a fiber cloth is affixed to at least a sliding part at the tip of the lip part.

7. The wiper according to any one of Claims 1 to 6, wherein a fiber material or a spherical resin material is contained at least in the sliding part at the tip of the lip part.
